# EUROPÄISCHE PATENTSCHRIFT

(11) **EP 0 711 523 B1**
(45) Veröffentlichungstag und Bekanntmachung des Hinweises auf die Patenterteilung: **22.01.1997**
(21) Anmeldenummer: 94117650.5
(22) Anmeldetag: 09.11.1994
(51) Int. Cl.: A47J 43/12, A01J 13/00

(54) **Vorrichtung zum Herstellen von Schlagsahne**
Device for preparing whipped cream
Dispositif pour faire de la crème fouettée

(43) Veröffentlichungstag der Anmeldung: 15.05.1996
(73) Patentinhaber: F. VAIHINGER GmbH & CO. KOMMANDITGESELLSCHAFT, D-63110 Rodgau (DE)
(72) Erfinder: Hofmann, Andreas, Dipl.-Ing., D-65520 Bad Camberg (DE)
(74) Vertreter: Schieferdecker, Lutz, Dipl.-Ing.

(56) Entgegenhaltungen:
- CH-A- 405 196
- DE-U- 8 602 074
- FR-A- 2 139 989
- FR-A- 2 367 432
- US-A- 3 333 744
- US-A- 4 766 739

## Beschreibung

Die Erfindung betrifft ein Verfahren und eine Vorrichtung zum Herstellen von Schlagsahne sowie dazu benötigte Komponenten.

Aus der CH-A-405 196 ist bereits eine Vorrichtung zum Herstellen von Schlagsahne mit Hilfe einer Schlageinrichtung bekannt, wobei eine von einem Motor angetriebene Pumpe vorgesehen ist und Luft und Rohsahne durch die Schlageinrichtung zu einer Schlagsahne-Abgabeinrichtung fördert. Sie umfasst ferner eine Kühleinrichtung und einen Kühlbehälter für die ungeschlagene Rohsahne, damit diese so lange wie möglich haltbar ist. Der Kühlbehälter ist ein nach oben offener Behälter und wird bei Bedarf entsprechend mit Rohsahne gefüllt. Ein gemeinsamer Deckel dient zum Verschließen des Kühlbehälters und zugleich auch zum Verschließen der Vorrichtung.

Eine vom Prinzip her ähnlich aufgebaute Vorrichtung zum Herstellen von Schlagsahne ist in der US-A- 4 766 739 dargestellt und beschrieben. Auch hier ist ein zur Aufnahme der Rohsahne dienender, wannenförmiger Behälter vorgesehen und wird nach dem Einfüllen der Rohsahne mit einem Deckel verschlossen. Hierdurch soll wie in dem zuerst beschriebenen Fall das Eindringen von Bakterien in die Rohsahne verhindert werden, damit diese so lange wie möglich frisch bleibt.

Schließlich betrifft auch noch die FR-A-2 367 432 eine Vorrichtung zum Herstellen von Schlagsahne. Das hier zur Aufnahme der Rohsahne dienende Gefäß ist ständig geschlossen. Es wird nur zur Reinigung und zum Füllen geöffnet.

Obwohl mit den bekannten Vorrichtungen grundsätzlich hygenisch gearbeitet werden kann, läßt sich das Eindringen von Bakterien in die Rohsahne nicht verhindern. Auch ist der mit der gewünschten Hygiene verbundene Aufwand außerordentlich groß, so daß immer wieder die Gefahr besteht, daß Hygiene-Vorschriften nicht beachtet werden. Der Erfindung liegt daher die Aufgabe zugrunde, das mögliche Eindringen von Bakterien in die Rohsahne noch besser als bisher zu verhindern und insofern auch die Handhabung der Vorrichtung erheblich zu vereinfachen.

Gelöst wird diese Aufgabe mit den Merkmalen des kennzeichnenden Teiles des Patentanspruches 1 dadurch, daß bereits in einer Molkerei original-verpackte Rohsahne unmittelbar mit ihrem Sahne-Verpackungsbehälter in dem Kühlbehälter der Vorrichtung zum Herstellen von Schlagsahne angeordnet wird und daß der Sahne-Verpackungsbehälter sodann an die Schlageinrichtung der Vorrichtung angeschlossen wird.

Ebenso wie beim Transport befindet sich die Rohsahne auch in der Vorrichtung zum Herstellen von Schlagsahne unmittelbar in ihrem original-verpackten Zustand im Inneren ihres Sahne-Verpackungsbehälters. Das bisher erforderliche Reinigen des zur Aufnahme der Rohsahne dienenden Behälters entfällt daher völlig. Das Handhaben und Reinigen der Vorrichtung ist daher einfacher als bisher. Darüberhinaus kommt die in dem Sahne-Verpackungsbehälter befindliche Sahne bis zur Verarbeitung nicht mit Luft und somit auch nicht mit Bakterien in Berührung. Da der Sahne-Verpackungsbehälter in Weiterbildung der Erfindung ein biegsamer Sahnebeutel ist, verformt er sich bei der Entnahme der Rohsahne mit der Folge, daß auch aus diesem Grund atmosphärische Luft nicht wie bisher in sein Inneres nachströnachströmen muß. Hierdurch läßt sich ein wesentlich höherer Hygienegrad erzielen. Es entfällt also nicht nur die Reinigung des die Rohsahne aufnehmenden Behälters völlig, sondern die Rohsahne kommt mit Luft und folglich mit Bakterien nicht vor der Verarbeitung in Berührung. Eine deutliche Verbesserung der Qualität und eine Erhöhung der möglichen Verarbeitungsdauer und der Lagerfähigkeit der Rohsahne sind die Folge.

Zur Durchführung des Verfahrens ist vorrichtungsseitig eine lösbare Kupplung vorgesehen, die zum Verbinden des Sahne-Verpackungsbehälters mit einer Rohsahne-Ansaugleitung für die Schlageinrichtung dient.

Weitere Merkmale der Erfindung gehen aus Unteransprüchen hervor.

Die Erfindung wird nachstehend anhand eines Ausführungsbeispieles, das in der Zeichnung dargestellt ist, näher beschrieben. Dabei zeigen:
- Fig. 1:: eine Prinzipskizze der Vorrichtung;
- Fig. 2:: einen Schnitt durch die Kupplung in größerem Maßstab und
- Fig. 3:: in nochmals anderem Maßstab eine getrennte Darstellung des jeweils abgeschnittenen Sahne-Verpackungsbehälters und der Rohsahne-Ansaugleitung sowie der Kupplung.

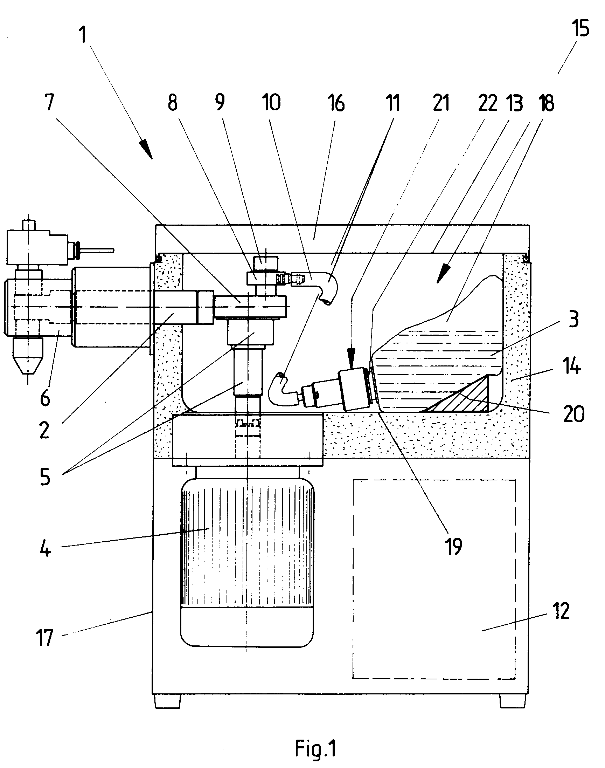

Eine Vorrichtung 1 zum Herstellen von Schlagsahne umfaßt eine Schlageinrichtung 2 zum Beispiel in Gestalt eines Schlagrohres, durch das Rohsahne 3 und Luft in grundsätzlich bekannter Weise mit Hilfe einer von einem Motor 4 angetriebenen Pumpe 5 gedrückt und sodann als Schlagsahne zu einer Schlagsahne-Abgabeeinrichtung 6 gefördert werden. Zur Pumpe 5 gehören ein ebenfalls grundsätzlich bekannter Ventilkopf 7 und ein Sauggehäuse 8 mit einer Regeleinrichtung 9 für die der Rohsahne 3 beizumengenden Luft. An dem Sauggehäuse 8 ist ferner das eine Ende 10 einer Rohsahne-Ansaugleitung 11 angeschlossen, wie Fig. 1 zeigt.

Zu der Vorrichtung 1 gehören ferner eine Kühleinrichtung 12 und ein Kühlbehälter 13, der allseitig gegen Wärmeaufnahme mit Hilfe von Isoliermaterial 14 geschützt ist und dessen Inneres 15 nach oben mit Hilfe eines Deckels 16 abgedeckt ist. Wie Fig. 1 zeigt befinden sich mindestens ein Teil der Schlageinrichtung 2, die Pumpe 5 mit ihrem Ventilkopf 7 und dem Sauggehäuse 8 sowie die Rohsahne-Ansaugleitung 11 im Inneren 15 des Kühlbehälters 13. Ferner dient ein Gehäuse 17 zur Aufnahme der besagten Bauteile bzw. Komponenten.

Auch die Rohsahne 3 ist im Inneren 15 des Kühlbehälters 13 angeordnet. Sie befindet sich dort jedoch nicht in offenem Zustand, sondern noch originalverpackt in einem Sahne-Verpackungsbehälter 18, in den die Rohsahne 3 jeweils bereits in der Molkerei abgefüllt wird. Der Sahne-Verpackungsbehälter 18 liegt zum Beispiel auf dem Boden 19 des Kühlbehälters 13, wobei ferner zweckmäßigerweise ein Keil oder eine Schräge 20 bzw. alternativ eine nicht dargestellte Aufhängevorrichtung dafür sorgen und sicherstellen, daß alle Rohsahne 3 bei der Entnahme problemlos aus dem Sahne-Verpackungsbehälter 18 ausfließen kann.

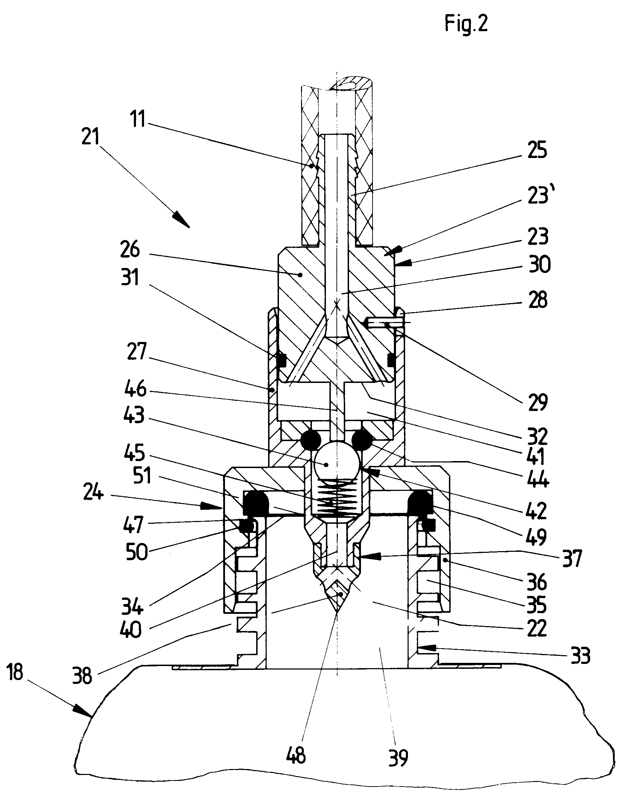

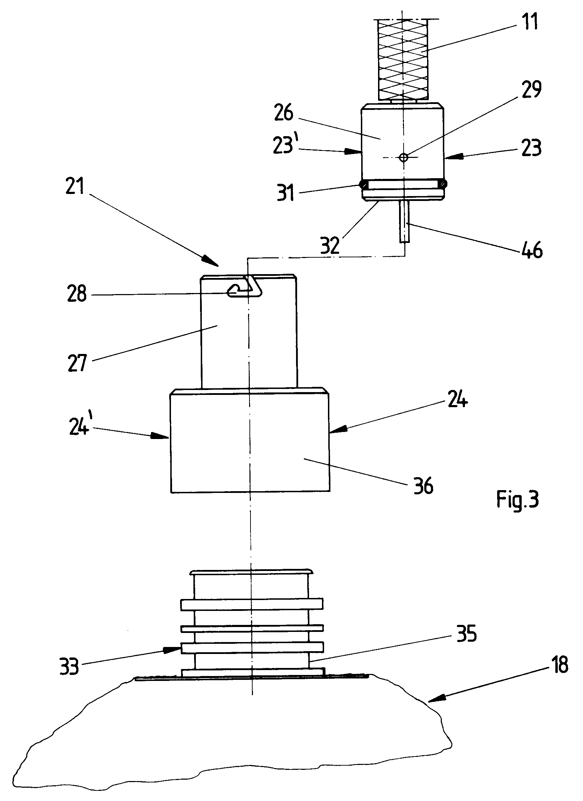

Schließlich ist noch eine lösbare Kupplung 21 vorgesehen und dient zum Verbinden einer Entnahmeöffnung 22 des Sahne-Verpackungsbehälters 18 mit der zu dem Sauggehäuse 8 bzw. zu dem Ventilkopf 7 und somit zu der Schlageinrichtung 2 führenden Rohsahne-Ansaugleitung 11. Die aus zwei Kupplungshälften 23' und 24' bestehende, lösbare Kupplung 21 ist eine Schnellkupplung und umfaßt einen Schlauchadapter 23 und einem Verpackungsbehälter-Adapter 24 gemäß den Fig. 2 und 3.

Der Schlauchadapter 23 wird mit Hilfe eines Schlauchnippels 25 dauerhaft an der Rohsahne-Ansaugleitung 11 in grundsätzlich bekannter Weise befestigt (Fig. 2) und umfaßt ein zum Beispiel zylindrisches Anschlußstück 26, das in ein hülsenförmiges Schlauchadapter-Anschlußteil 27 des Verpackungsbehälter-Adapters 24 einsetzbar und mit Hilfe von Bajonettverschlußelementen 28, 29 einfach und schnell sowie sicher mit diesem verbindbar und wieder lösbar ist. Der Schlauchadapter 23 weist ferner mindestens einen durchgehenden Strömungskanal 30 und zum Abdichten gegenüber dem hülsenförmigen Schlauchadapter-Anschlußteil 27 eine Ringdichtung 31 auf. Der Strömungskanal 30 endet im zylindrischen Anschlußstück 26 gemäß Ausführungsbeispiel außermittig an einer dem Schlauchnippel 25 gegenüberliegenden Stirnfläche 32.

Der Sahne-Verpackungsbehälter 18 weist einen Behälterstutzen 33 auf, dessen Entnahmeöffnung 22 nach dem Einfüllen der Rohsahne 3 in einer Molkerei mit Hilfe eines Verschlußteiles 34, zum Beispiel mit Hilfe einer Verschlußmembran bzw. einer Folie verschlossen wird.

Der Behälterstutzen 33 kann grundsätzlich auf seiner Außenseite aber auch ein Gewinde zum Aufsetzen eines Deckels oder gemäß dem in Fig. 2 dargestellten Ausführungsbeispiel auch Rillen 35 bzw. eine sonstige Einrichtung zum lösbaren sowie flüssigkeitsdichten Befestigen des Verpackungsbehälter-Adapters 24 der Kupplung 21 aufweisen.

Der Verpackungsbehälter-Adapter 24 umfaßt eine an dem Behälterstutzen 33 lösbar sowie flüssigkeitsdicht befestigbare Kappe 36, die auf ihrer dem Behälterstutzen 33 abgewandten Seite das Schlauchadapter-Anschlußteil 27 trägt. Ferner befindet sich ein Entnahmeteil 37 für die Rohsahne 3 behälterseitig an dem Verpackungsbehälter-Adapter 24 bzw. an dessen Kappe 36 und greift mit seinem freien Ende 38 in das Innere 39 des Sahne-Verpackungsbehälters 18. Gemäß dem in Fig. 2 dargestellten Ausführungsbeispiel ist das Innere 39 des Sahne-Verpackungsbehälters 18 zugleich das Innere des Behälterstutzens 33.

Der Verpackungsbehälter-Adapter 24 weist ferner einen durchgehenden Strömungsweg 40 vom freien Ende 38 des Entnahmeteiles 37 bis zum Inneren 41 seines hülsenförmigen Schlauchadapter-Anschlußteiles 27 auf, wobei ferner ein federbelastetes Ventil 42 in diesem Strömungsweg 40 angeordnet ist.

Das Ventil 42 umfaßt einen Ventilverschlußkörper 43, einen von einem Dichtring gebildeten Ventilsitz 44 und eine Ventil-Schließfeder 45. Der Ventilverschlußkörper 43 ist vorzugsweise eine Ventilkugel und befindet sich in der Nähe des hülsenförmigen Schlauchadapter-Anschlußteiles 27.

Während die Ventilschließfeder 45 den Ventilverschlußkörper 43 in Schließrichtung zum Schlauchadapter 23 hin und dabei gegen den Ventilsitz 44 drückt, ist an der Stirnfläche 32 des zylindrischen Anschlußstückes 26 des Schlauchadapters 23 ein Steuerteil 46 vorgesehen, mit dessen Hilfe der Ventilverschlußkörper 43 beim Kuppeln von Schlauchadapter 23 und Verpackungsbehälter-Adapter 24 in Öffnungsrichtung verschoben und sodann in der geöffneten Stellung gegen die Kraft der Ventilschließfeder 45 gehalten wird (Fig. 2).

Der Steuerteil 46 am Schlauchadapter 23 ist ein Steuerstift, der mit seinem freien Ende nach dem Kuppeln von Schlauchadapter 23 und Verpackungsbehälter-Adapter 24 an dem Ventilverschlußkörper 43 anliegt und ihn im erforderlichen Umfang von dem Ventilsitz abhebt.

Der Sahne-Verpackungsbehälter 18 weist gemäß Fig. 2 im originalverpackten Zustand an seinem freien Ende 47 zum Verschließen der Entnahmeöffnung 22 das oben bereits erwähnte Verschlußteil 34 in Gestalt einer Verschlußmembran oder einer Folie auf. Beim Aufsetzen des Verpackungsbehälter-Adapters 24 auf den Behälterstutzen 33 durchstößt das Entnahmeteil 37 mit einer Spitze 48 an seinem freien Ende 38 das Verschlußteil 34. Sobald die Kappe 36 des Verpackungsbehälter-Adapters 24 mit Hilfe einer randseitig auf dem Verschlußteil 34 aufsitzenden Dichtung 49 flüssigkeitsdicht und mit Hilfe eines Halteringes 50 an dem Behälterstutzen 33 in lösbarer Weise befestigt bzw. gesichert ist, befindet sich das freie Ende 38 des Entnahmeteiles 37 im Inneren 39 des Sahne-Verpackungsbehälters 18, so daß Rohsahne über den Strömungsweg 40 und durch das Ventil 42 bzw. durch den Schlauchadapter 23 bis in die Rohsahne-Ansaugleitung 11 gelangen kann.

Das Entnahmeteil 37 ist gemäß dem in Fig. 2 dargestellten Ausführungsbeispiel sehr kurz und ragt nur bis in die Entnahmeöffnung 22 des Behälterstutzens 33. Zwingend notwendig ist eine derartige Länge jedoch nicht. Das Entnahmeteil 37 kann grundsätzlich auch die Form einer Lanze besitzen und dann bis tief in den Sahne-Verpackungsbehälter 18 ragen.

Der Sahne-Verpackungsbehälter 18 kann ganz oder teilweise formstabil bzw. biegsam sein. Vorzugsweise ist der Sahne-Verpackungsbehälter 18 ein biegsamer Sahnebeutel.

Beim Durchstoßen des membran-folienartigen Verschlußteiles 34 erzeugt das Entnahmeteil 37 eine Durchtrittsöffnung 51 für das Entnahmeteil 37. Trotz dieser Durchtrittsöffnung ist der Sahne-Verpackungsbehälter 18 gegenüber der Umgebungsluft hermetisch abgeschlossen, wobei dies auch dann gilt, wenn der Schlauchadapter 23 von dem Verpackungsbehälter-Adapter 24 abgenommen wird, um zum Beispiel die Rohsahne-Ansaugleitung 11 und weitere Teile der Vorrichtung 1 zu reinigen bzw. zu spülen.

Wesentlich ist somit, daß im Kühlbehälter 13 der Vorrichtung 1 immer ein geschlossener Sahne-Verpackungsbehälter 18 angeordnet ist und daß die verpackungsbehälterseitige Kupplungshälfte 24' Teile, nämlich das Schlauchadapter-Anschlußteil 27 und das Bajonett-Verschlußelement 28 zum Verbinden mit der anderen Kupplungshälfte 23' einerseits und andererseits Teile, nämlich die Spitze 48 am Entnahmeteil 37 und das Ventil 42 zum Öffnen und zum Schließen des Sahne-Verpackungsbehälters 18 aufweist.

Es versteht sich schließlich, daß die Erfindng nicht auf das in den Figuren konkret dargestellte Ausführungsbeispiel beschränkt ist, vielmehr können auch noch Abwandlungen vorgenommen werden, ohne von dem grundsätzlichen Erfindungsgedanken abzuweichen. Zwar ist es gemäß dem in den Figuren dargestellten Ausführungsbeispiel besonders zweckmäßig, einen Haltering 50 in Gestalt eines O-Ringes zum Verbinden und Trennen der Kappe 36 an dem Behälterstutzen 33 unter Verwendung von Rippen und Nuten vorzusehen. Der Haltering 50 rastet nämlich problemlos im Bereich des freien Randes des Behälterstutzens 33 ein. Zum Beispiel dieses und weitere Merkmale können aber auch durch andere Merkmale ersetzt werden.

Gemäß dem Grundgedanken der Erfindung ist die Kupplung ein Element, das in lösbarer Weise die Rohsahne-Ansaugleitung 11 mit einem Original-Sahne-Verpackungsbehälter verbindet. Gemäß der bevorzugten Ausführungsform besteht die Kupplung 21 aus zwei Kupplungshälften, wobei die eine Kupplungshälfte mit der Rohsahne-Ansaugleitung 11 verbunden ist und die andere Kupplungshälfte ein Verschlußelement in Gestalt eines Ventiles aufweist und mit dem Sahne-Verpackungsbehälter in lösbarer Weise verbindbar ist und wobei ferner die beiden Kupplungshälften bei Bedarf miteinander verbunden bzw. voneinander gelöst werden.

## Patentansprüche

1. Verfahren zum Versorgen einer Vorrichtung (1) zum Herstellen von Schlagsahne mit Rohsahne (3),
dadurch gekennzeichnet, daß
in einer Molkerei original-verpackte Rohsahne (3) unmittelbar mit ihrem Sahne-Verpackungsbehälter (18) in dem Kühlbehälter (13) der Vorrichtung (1) zum Herstellen von Schlagsahne angeordnet wird und
daß der Sahne-Verpackungsbehälter (18) sodann an die Schlageinrichtung (2) der Vorrichtung (1) angeschlossen wird.

2. Sahne-Verpackungsbehälter für Rohsahne zur Durchführung des Verfahrens nach Anspruch 1.

3. Sahne-Verpackungsbehälter nach Anspruch 2, gekennzeichnet durch eine Form derart, daß er auf den Boden (19) des Kühlbehälters (13) legbar ist.

4. Sahne-Verpackungsbehälter nach Anspruch 2, dadurch gekennzeichnet, daß er ein biegsamer Sahnebeutel ist.

5. Sahne-Verpackungsbehälter nach Anspruch 2 gekennzeichnet durch ein ihm zusätzlich zugeordnetes, die problemlose Entnahme der Rohsahne (3) sicherstellendes Teil mit einer Schräge (2) bzw. durch eine ihm zusätzlich zugeordnete Aufhängevorrichtung.

6. Sahne-Verpackungsbehälter nach mindestens einem der Ansprüche 2 bis 5, dadurch gekennzeichnet, daß er einen Behälterstutzten (33) aufweist.

7. Sahne-Verpackungsbehälter nach mindestens einem der Ansprüche 2 bis 6, dadurch gekennzeichnet, daß der Behälterstutzen (33) eine Entnahmeöffnung (22) aufweist, der nach dem Einfüllen der Rohsahne (3)in einer Molkerei ein Verschlußteil (34), insbesondere eine Verschlußmembran bzw. eine Folie zugeordnet ist.

8. Sahne-Verpackungsbehälter nach mindestens einem der Ansprüche 2 bis 7, dadurch gekennzeichnet, daß ihm eine Kupplung (21) zugeordnet ist .

9. Kupplung zum Anschließen eines Sahne-Verpackungsbehälters (18) an eine Vorrichtung (1) zum Herstellen von Schlagsahne zur Durchführung des Verfahrens nach Anspruch 1.

10. Kupplung nach Anspruch 9, dadurch gekennzeichnet, daß sie zwei Kupplungshälften (23' und 24') in Form eines Schlauchadapters (23) und eines kuppelbaren Verpackungsbehälter-Adapters (24) umfaßt.

11. Kupplung nach mindestens einem der Ansprüche 9 und 10,gekennzeichnet durch eine ihr zugeordnete Rohsahne-Ansaugleitung (11).

12. Kupplung nach mindestens einem der Ansprüche 10 oder 11, dadurch gekennzeichnet, daß die verpackungsbehälterseitige Kupplungshälfte (24') Teile (27, 28) zum Verbinden mit der anderen Kupplungshälfte (23')und Teile (42, 48) zum Anschließen des Sahne-Verpackungsbehälters (18) aufweist.

13. Kupplung nach mindestens einem der Ansprüche 10 - 12, dadurch gekennzeichnet, daß der Verpackungsbehälter-Adapter (24) eine an einem Behälterstutzen (33) lösbar sowie flüssigkeitsdicht befestigbare Kappe (36) und einen Schlauchadapter-Anschlußteil (27) für den kuppelbaren Schlauchadapter (23) sowie einen durchgehenden Strömungsweg (40) mit einem federbelasteten Ventil (42) umfaßt.

14. Kupplung nach Anspruch 13, dadurch gekennzeichnet, daß das Ventil (42) einen in der Schließrichtung zum Schlauchadapter (23) hin federbelasteten Ventilverschlußkörper (43) aufweist und daß der Schlauchadapter (23) ein den Ventilverschlußkörper (43) in Öffnungsrichtung verschiebendes und haltendes Steuerteil (46) umfaßt .

15. Kupplung nach Anspruch 14, dadurch gekennzeichnet, daß das den Ventilverschlußkörper (43) öffnende Steuerteil (46) ein Steuerstift ist .

16. Kupplung nach mindestens einem der Ansprüche 13 - 15, dadurch gekennzeichnet, daß der Verpackungsbehälter-Adapter (24) mindestens ein in das Innere (39) des Sahne-Verpackungsbehälters (18) einführbares Entnahmeteil (37) mit mindestens einem zum Ventil (42) führenden Strömungskanal (40) aufweist .

17. Kupplung nach mindestens einem der Ansprüche 13-16, dadurch gekennzeichnet, daß der Schlauchadapter (23) mindestens einen Strömungskanal (30) für die Rohsahne (3) aufweist und mit Hilfe von Bajonettverschlußelementen (28, 29) an dem Schlauchadapter-Anschlußteil (27) des Verpackungsbehälter- Adapters (24) in lösbarer Weise befestigbar ist.

18. Kupplung nach mindestens einem der Ansprüche 16 oder 17, dadurch gekennzeichnet, daß das Entnahmeteil (37) eine Spitze (48) zum Durchstoßen des Verschlußteiles (34) aufweist.

19. Vorrichtung zur Durchführung des Verfahrens nach Anspruch 1 zum Herstellen von Schlagsahne mit Hilfe einer Schlageinrichtung (2), wobei eine von einem Motor (4) angetriebene Pumpe (5) vorgesehen ist und Luft und Rohsahne (3) durch die Schlageinrichtung (2) zu einer Schlagsahne-Abgabeeinrichtung (6) fördert, sowie mit einer Kühleinrichtung (12) und mit einem Kühlbehälter (13) für die ungeschlagene Rohsahne (3), gekennzeichnet durch die Anordnung eines auswechselbaren, in einer Molkerei original-verpackten Sahne-Verpackungsbehälters (18) mit Rohsahne (3) im Kühlbehälter (13) und durch die Anordnung einer lösbaren Kupplung (21) zum Verbinden des Sahne-Verpackungsbehälters (18) mit einer Rohsahne-Ansaugleitung (11) für die Schlageinrichtung (2).

20. Vorrichtung nach Anspruch 19, gekennzeichnet durch die Anordnung eines geschlossenen Sahne-Verpackungsbehälters (18) im Kühlbehälter (13).

## Claims

1. A method of supplying an apparatus (1) for producing whipped cream with unwhipped cream (3), characterised in that
unwhipped cream (3) originally packaged in a dairy is arranged directly with its cream packaging container (18) in the cooling container (13) of the apparatus (1) for producing whipped cream, and
the cream packaging container (18) is then connected to the whipping device (2) of the apparatus (1).

2. A cream packaging container for unwhipped cream for carrying out the method according to claim 1.

3. A cream packaging container according to claim 2 characterised by a shape such that it can be laid on the bottom (19) of the cooling container (13).

4. A cream packaging container according to claim 2 characterised in that it is a flexible cream bag.

5. A cream packaging container according to claim 2 characterised by a portion having an incline (20), which portion is additionally associated with the cream packaging container and which ensures removal of the unwhipped cream (3) without difficulty, or by a suspension device which is additionally associated with the cream packaging container.

6. A cream packaging container according to at least one of claims 2 to 5 characterised in that it has a container connection (33).

7. A cream packaging container according to at least one of claims 2 to 6 characterised in that the container connection (33) has a removal opening (22) with which a closure portion (34), in particular a closure membrane or a foil, is associated, after the cream packaging container has been filled with the unwhipped cream (3) in a dairy.

8. A cream packaging container according to at least one of claims 2 to 7 characterised in that a coupling (21) is associated therewith.

9. A coupling for connecting a cream packaging container (18) to an apparatus (1) for producing whipped cream for carrying out the method according to claim 1.

10. A coupling according to claim 9 characterised in that it includes two coupling halves (23' and 24') in the form of a hose adaptor (23) and a couplable packaging container adaptor (24).

11. A coupling according to at least one of claims 9 and 10 characterised by an unwhipped cream suction intake line (11) associated with it.

12. A coupling according to at least one of claims 10 and 11 characterised in that the coupling half (24') at the packaging container side has portions (27, 28) for oonnection to the other coupling half (23') and portions (42, 48) for connection of the cream packaging container (18).

13. A coupling according to at least one of claims 10 to 12 characterised in that the packaging container adaptor (24) includes a cap (36) which can be releasably and fluid-tightly fixed to a container connection (33) and a hose adaptor connecting portion (27) for the couplable hose adaptor (23) and a continuous flow path (40) with a spring-loaded valve (42).

14. A coupling according to claim 13 characterised in that the valve (42) has a valve closure body (43) which is spring-loaded in the closing direction towards the hose adaptor (23) and that the hose adaptor (23) includes a control portion (46) which displaces and holds the valve closure body (43) in the opening direction.

15. A coupling according to claim 14 characterised in that the control portion (46) for opening the valve closure body (43) is a control pin.

16. A coupling according to at least one of claims 13 to 15 characterised in that the packaging container adaptor (24) has at least one removal portion (37) which can be introduced into the interior (39) of the cream packaging container (18) and which has at least one flow passage (40) leading to the valve (42).

17. A coupling according to at least one of claims 13 to 16 characterised in that the hose adaptor (23) has at least one flow passage (30) for the unwhipped cream (3) and can be releasably fined by means of bayonet closure elements (28, 29) to the hose adaptor connecting portion (27) of the packaging container adaptor (24).

18. A coupling according to at least one of claims 16 and 17 characterised in that the removal portion (37) has a point (48) for piercing the closure portion (34).

19. Apparatus for carrying out the method according to claim 1 for producing whipped cream by means of a whipping device (2), wherein there is provided a pump (5) driven by a motor (4) and the pump conveys air and unwhipped cream (3) through the whipping device (2) to a whipped cream discharge device (6), and having a cooling device (12) and a cooling container (13) for the unwhipped cream (3), characterised by the arrangement of an interchangeable cream packaging container (18) originally packaged in a dairy with unwhipped cream (3) in the cooling container (13) and by the arrangement of a releasable coupling (21) for connecting the cream packaging container (18) to an unwhipped cream suction intake line (11) for the whipping device (2).

20. Apparatus according to claim 19 characterised by the arrangement of a closed cream packaging container (18) in the cooling container (13).

## Revendications

1. Procédé pour l'alimentation d'un dispositif (1) de fabrication de crème fouettée a partir de crème liquide (3), caractérisé
en ce que la crème liquide (3), emballée d'origine dans une laiterie, est disposée directement avec son récipient d'emballage de crème (18) dans le récipient de refroidissement (13) du dispositif (1) pour la fabrication de la crème fouettée et
en ce que le récipient d'emballage de crème (18) est alors raccordé au dispositif de fouettage (2) du dispositif (1).

2. Récipient d'emballage de crème pour la crème liquide en vue de la mise en oeuvre de procédé selon la revendication 1.

3. Récipient d'emballage de crème selon la revendication 2, caractérisé par une forme faisant qu'il peut s'appliquer au fond (19) du récipient de refroidissement (13).

4. Récipient d'emballage de crème selon la revendication 2, caractérisé en ce qu'il est constitué par un sachet de crème souple.

5. Récipient d'emballage de crème selon la revendication 2, caractérisé par une pièce, qui est associée en supplément à ce dernier, qui assure le prélèvement sans problème de la crème liquide (3) et qui présente un chanfrein (2), respectivement par un dispositif de suspension associé en supplément à ce dernier.

6. Récipient d emballage de crème selon au moins l'une des revendications 2 à 5, caractérisé en ce qu'il présente une tubulure de récipient (33).

7. Récipient d'emballage de crème selon au moins l'une des revendications 2 à 6, caractérisé en ce que la tubulure de récipient (33) présente une ouverture de prélèvement (22) qui est associée, après le remplissage de la crème liquide (3) dans une laiterie, à une partie d'obturation (34) en particulier une membrane d'obturation respectivement une pellicule.

8. Récipient d'emballage de crème selon au moins l'une des revendications 2 à 7, caractérisé en ce qu'il est associé à un accouplement (21).

9. Accouplement pour le raccordement d'un récipient d'emballage de crème (18) à un dispositif (1) de fabrication de crème fouettée pour la mise en oeuvre du procédé selon la revendication 1.

10. Accouplement selon la revendication 9, caractérisé en ce qu'il comprend deux moitiés d'accouplement (23' et 24') sous forme d'un adaptateur de tuyau flexible (23) et d'un adaptateur de récipient d'emballage (24) pouvant être accouplé.

11. Accouplement selon au moins l'une des revendications 9 et 10, caractérisé par une conduite d'aspiration de crème liquide (11) qui lui est associée.

12. Accouplement selon au moins l'une des revendications 10 ou 11, caractérisé en ce que la moitié d'accouplement (24'), côté récipient d'emballage, présente des pièces (27, 28) pour le raccordement avec l'autre moitié d'accouplement (23') et des pièces (42, 48) pour le raccordement au récipient d'emballage de crème (18).

13. Accouplement selon au moins l'une des revendications 10 - 12, caractérisé en ce que l'adaptateur de récipient d'emballage de crème (24) comprend un bouchon (36) fixé de manière amovible et de manière étanche au liquide sur une tubulure de récipient (33) et un embout d'adaptateur de tuyau flexible (27) destiné à l'adaptateur de tuyau flexible (23) accouplé ainsi qu'un chemin d'écoulement continu (40) avec une soupape (42) chargée par ressort.

14. Accouplement selon la revendication 13, caractérisé en ce que la soupape (42) présente un corps de fermeture de soupape (43), chargé par ressort dans le sens de fermeture en direction de l'adaptateur de tuyau flexible (23) et en ce que l'adaptateur de tuyau flexible (23) comprend une partie de commande (46) déplaçant et maintenant le corps de fermeture de soupape (43) dans le sens de l'ouverture.

15. Accouplement selon la revendication 14, caractérisé en ce que la partie de commande (46), ouvrant le corps de fermeture de soupape (43), est une broche de commande.

16. Accouplement selon l'une des revendications 13 - 15, caractérisé en ce que l'adaptateur de récipient d'emballage (24) présente au moins une pièce de prélèvement (37), pouvant être insérée à l'intérieur (39) du récipient d'emballage de crème (18) et être munie d'au moins un canal d'écoulement (40) se dirigeant vers la soupape (42).

17. Accouplement selon au moins l'une des revendications 13-16, caractérisé en ce que l'adaptateur de tuyau flexible (23) présente au moins un canal d'écoulement (30) pour la crème liquide (3) et peut être fixé, de manière amovible, sur un embout d'adaptateur de tuyau flexible (27) de l'adaptateur de récipient d'emballage (24) à l'aide d'éléments de fermeture à bayonette (28, 29).

18. Accouplement selon au moins l'une des revendications 16 ou 17, caractérisé en ce que la partie de prélèvement (37) présente une pointe (48) pour transpercer la pièce de fermeture (34).

19. Dispositif pour la mise en oeuvre du procédé selon la revendication 1 pour la fabrication de crème fouettée à l'aide d'un dispositif de fouettage (2), une pompe (5), entraînée par un moteur (4), étant prévue pour transporter l'air et la crème liquide (3) par le dispositif de fouettage (2) en direction d'un dispositif de distribution de crème fouettée (6) et comprenant un dispositif de refroidissement (12) et un récipient de refroidissement (13) destinés à la crème liquide non fouettée (3), caractérisé par la disposition d'un récipient interchangeable d'emballage de crème (18), respectivement emballé à l'origine dans une laiterie, rempli de crème liquide (3) dans le récipient de refroidissement (13) et par la disposition d'un accouplement (21) amovible pour la liaison du récipient d'emballage de crème (18) à une conduite d'aspiration de crème liquide (11) destinée au dispositif de fouettage (2).

20. Dispositif selon la revendication 19, caractérisé par la disposition d'un récipient fermé d'emballage de crème (18) dans le récipient de refroidissement (13).
